# EUROPEAN PATENT SPECIFICATION

(11) **EP 3 654 781 B1**
(45) Date of publication and mention of the grant of the patent: **31.03.2021**
(21) Application number: 17792204.4
(22) Date of filing: 19.07.2017
(51) Int. Cl.: A23L 27/10, A23B 7/00, A23B 7/005, A23L 19/00

(54) **GARLIC MARINATING PROCESS**
VERFAHREN ZUM MARINIEREN VON KNOBLAUCH
PROCÉDÉ DESTINÉ À FAIRE MARINER DE L'AIL

(43) Date of publication of application: 27.05.2020
(73) Proprietor: Giacchetti, Maurizio, 60021 Camerano (AN) (IT)
(72) Inventor: Giacchetti, Maurizio, 60021 Camerano (AN) (IT)
(74) Representative: Baldi, Claudio
(86) International application number: PCT/IT2017/000149
(87) International publication number: WO 2019/016836

(56) References cited:
- CN-A- 1 899 101
- CN-A- 101 066 115
- CN-A- 105 851 986
- JP-A- 2010 022 289
- US-B1- 6 197 354

## Description

The present patent application for industrial invention relates to a garlic marinating process, as defined by the appended claims.

The reference sector is gastronomy, in particular in-oil preserved foods.

It is known that garlic is rich in mineral and oligomineral substances that are healthy for the human body, such as magnesium, calcium, phosphorus, iodine, iron, zinc, manganese, selenium, vitamin C, vitamins B1-B2-PP and provitamin A.

Moreover, garlic has beneficial properties for the body. More precisely, garlic reinforces the immune system and acts as powerful bactericide and vermicide for the body. Moreover, the intake of garlic regulates the blood pressure, reduces the risk of sclerosis for the arteries, prevents the formation of thrombi, and stabilizes the level of cholesterol and triglycerides in the blood.

Furthermore, garlic can be used as antibiotic when the intestinal bacterial flora is altered by previous treatments. Unlike chemical antibiotics, garlic eliminates pathogen bacteria, while favoring the restoration of bacterial flora.

As it is known, the intake of garlic favors the protection against heavy metals that are harmful for the body. Heavy metals enter the body through smog, dental fillings, and contaminated fruits and vegetables. In such a case, garlic acts as chelator, that is to say it binds with molecules of heavy metals in the body and eliminates them.

Moreover, it must be noted that garlic gives a healthy aspect to the skin and favors hair growth.

Furthermore, garlic comprises alkaloid substances that carry out a similar action to insulin, reducing the glycemia level in the blood.

It is therefore recommended to take garlic regularly in order to benefit from its therapeutic properties.

In spite of having many beneficial properties for the body, garlic has several drawbacks.

A first inconvenience consists in the fact that garlic has an unpleasant flavor and smell.

The unpleasant flavor and smell of garlic are due to the presence of sulphured compounds, in particular allicin. Garlic releases its typical smell when it is chewed, cut or pressed.

Because of said unpleasant smell and flavor, garlic is used for food flavoring, but is not ingested.

A second drawback of garlic consists in the fact that it is not very digestible after being cooked.

Such drawbacks discourage the ingestion of garlic, thus preventing the body from benefiting from the therapeutic properties of garlic.

CN101066115 discloses a preparation process of jars with flavored garlic cloves that provides for the following steps:
- heating the garlic cloves in water at high temperature (90-100°),
- three brining steps of the garlic cloves in such a way to increase the salinity of the garlic cloves to 20-30%,
- two desalting steps of the garlic cloves in such a way to reduce the salinity of the garlic cloves to 3-15%,
- marinating the garlic cloves in a vinegar solution.

Such a process is impaired by drawbacks related to the heating step of the garlic cloves in high temperature water. In fact, the heating of the garlic cloves at a temperature of 90 - 100°C impairs the organoleptic characteristics of the garlic cloves. Moreover, since it contains a high quantity of salt, the brine tends to dehydrate the garlic cloves, further reducing their organoleptic properties.

The purpose of the present invention is to remedy the drawbacks of the prior art by disclosing a garlic marinating process that improves the digestibility of garlic and eliminates its unpleasant smell and taste.

An additional purpose is to disclose a garlic marinating process that does not alter the chemical-physical structure of the garlic.

The garlic marinating process of the invention provides for using peeled garlic cloves with a salt concentration comprised between 10% and 25% and a citric acid content of 0.5%. Such a process has a total duration comprised between 3 and 5 days. Initially, such a process provides for a step of immersing the garlic cloves in a receptacle, known as desalter, containing drinking water, for an immersion time comprised between 2 and 4 days, in order to reduce the salt concentration of the garlic to 2%. The quantity of garlic cloves introduced in the receptacle is equal to the quantity of water contained in the receptacle. In fact, it must be noted that the introduction of a quantity of garlic cloves lower than the quantity of water contained in the receptacle would excessively rinse the garlic cloves, consequently reducing the organoleptic properties of the garlic cloves. On the contrary, the introduction of a quantity of garlic cloves higher than the quantity of water contained in the receptacle would extend the desalting time of the garlic cloves.

It must be noted that the term "desalter" indicates a receptacle comprising:
- air blowers to blow air in the receptacle;
- a ball valve to introduce drinking water in the receptacle;
- a lower opening advantageously connected to a hose to let the drinking water out of the receptacle;
- recirculation pumps to re-circulate the water contained in the receptacle;
- thermal regulators to heat the water contained in the receptacle. During the step of immersing the garlic cloves in the drinking water contained in the desalter:
- the drinking water contained in the desalter is changed by introducing new drinking water in the desalter by means of the ball valve and by draining the salt drinking water contained in the desalter through the lower opening of the desalter;
- the drinking water contained in the desalter is mixed by the recirculation pumps of the desalter, in such a way that all garlic cloves have the same salt concentration;
- air is blown in the desalter by the air blower of the desalter, in such a way to create bubbling intended to make the garlic fumes evaporate;
- the drinking water contained in the desalter is heated to a temperature comprised between 45° and 50° in order to maintain a chemical-physical structure of the garlic cloves, and then is cooled to ambient temperature.

More precisely, during the first 30 - 60 hours from the step of immersing the garlic cloves in the drinking water contained in the desalter, the ball valve is left open in such a way to have a continuous water exchange. In particular, approximately 50 l/h of drinking water come out of the ball valve and are introduced in the desalter. Simultaneously, the same quantity of water comes out of the lower opening of the desalter and is drained by means of the pipe connected to said lower opening. The opening of the desalter is disposed in lower position in such a way that the water coming out of said opening of the desalter is the water that is disposed on the bottom of the desalter, that is to say water with a higher salinity. In fact, having a higher weight than the fresh water, the salty water tends to go down. In this way, the water contained in the desalter can be continuously exchanged, eliminating the saltiest water and introducing new fresh clean water, thus desalting the garlic cloves inside the desalter.

Simultaneously with such an exchange of the drinking water contained in the desalter, the air blowers of the desalter are operated in intermittent mode for time intervals of approximately 4 - 8 hours.

After approximately 20 - 30 hours from the beginning of the step of immersing the garlic cloves in the drinking water contained in the desalter, the water recirculation pumps are started and operated for the following 4 - 10 hours, in such a way that the water contained in the desalter is mixed and all garlic cloves have the same salt concentration and the same flavor.

After 30 - 60 hours from the beginning of the step of immersing the garlic cloves in the drinking water contained in the desalter, the garlic cloves immersed in the water are heated to a temperature of 45 - 50°C by means of the temperature regulators of the desalter. Advantageously, the air blowers of the desalter are operated at the minimum speed in order to blow a minimum air quantity in the desalter.

In this way, the chemical-physical structure of the garlic cloves is maintained. In fact, experimental studies and tests have shown that the alliinase enzyme is deactivated by heating the garlic cloves at a temperature of 45 - 50°C, avoiding the conversion of the alliin molecule into allicin, and consequently improving the flavor and digestibility of garlic.

Successively, the air blowers and the temperature regulators of the desalter are switched off, in such a way to let the drinking water contained in the desalter rest for approximately 1 hour.

The step of immersing the garlic cloves in the water contained in the desalter ends with the activation of the air blowers of the desalter, in such a way that the garlic cloves immersed in the water contained in the desalter are cooled to ambient temperature. Such a cooling lasts for 4 - 8 hours.

At the end of the step of immersing the garlic cloves in the water contained in the desalter, the salinity of the garlic cloves is checked because it must not exceed 2%.

If the check has a negative outcome, the drinking water contained in the desalter is changed again, in such a way to desalt the garlic cloves further.

Instead, if the check has a positive outcome, the drinking water flows out of the desalter, and a solution of drinking water, vinegar and anti-oxidants is poured in the desalter. In particular, such a solution is advantageously composed of the following weight percentages:
- 34 - 38% of vinegar,
- 2 - 6% of salt,
- 0.1 - 0.3% of citric acid,
- 0.02 - 0.08% of ascorbic acid,
- 57 - 61 % of water.

Such a solution is indiscriminately poured on the garlic cloves contained in the desalter, in such a way to cover all garlic cloves. The garlic cloves are marinated in the solution for 10 - 14 hours, in such a way to reduce the pH of the garlic cloves to 3.2 and prevent the garlic cloves from getting oxidized, thus maintaining a white color.

Finally, the garlic cloves are drained in order to eliminate the solution, at least partially.

Such a processing method of the garlic cloves reduces the unpleasant flavor of garlic to an imperceptible level, giving the garlic cloves a pleasant flavor without impairing their organoleptic characteristics and the beneficial properties for the human body, such as a reduction of the cholesterol level, a sense of lightness and a reduction of the blood pressure.

As a result, the garlic cloves are ready to be seasoned.

The garlic cloves are drained and dumped on stainless steel tables in order to be seasoned before being packaged in different containers.

Now the garlic cloves to be seasoned are sorted in such a way to eliminate any dark, broken or deformed cloves. After completing the sorting operation of the garlic cloves, the sorted garlic cloves are seasoned by adding the following spices:
- black pepper powder;
- crushed dried tomato;
- parsley;
- linen seeds.

The seasoning is indiscriminately distributed on the surface of the garlic cloves and, successively, the garlic cloves are mixed by hand.

It must be noted that, after marinating and seasoning the garlic cloves, said garlic cloves have a salinity of 2.5 - 3%.

The garlic cloves and the additional ingredients are ready to be packaged in jars.

Therefore, the seasoned garlic cloves are poured in the jars and sunflower oil is poured in a receptacle. Successively, curcuma is introduced in the receptacle that contains sunflower oil in such a way to mix the sunflower oil and the curcuma to obtain a sunflower oil - curcuma mix. In particular, 3.5 g of curcuma are diluted for every kg of sunflower oil.

The sunflower oil - curcuma mix is poured in the jars with the seasoned garlic cloves in such a way that the garlic cloves are immersed in the sunflower oil - curcuma mix.

The alliin contained in the garlic cloves and the curcuminoids contained in the curcuma favor the anti-oxidant, hypoglycaemic, antitumoral, antithrombotic, antibacterial, antiviral, hepatoproteinic and anti-fungus activity.

The combination of the black pepper powder and the curcuma makes it possible for a consumer to absorb the curcuma completely and benefit from all its properties that are beneficial for the body.

The ratio between the black pepper powder and the curcuma must be equal to 100 grams of curcumin and 1 gram of piperin to increase the efficacy of the curcuma absorption. In fact, experimental clinical tests have shown that piperin increases the bioavailability of curcumin when taken orally. This is because piperin is a powerful inhibitor of the metabolism of nutrients, and inhibits the hepatic and intestinal glucuronidation that slows down the metabolism of curcuma as a consequence. It is for this reason that the oral administration of curcuma and piperin determines high serum concentrations of the active compound after 1-2 hours from administration.

The jars are hermetically closed with caps and pasteurized at a temperature comprised between 88° and 90° in order to achieve a temperature comprised between 72° and 76°C in the center of the jar for 8 to 15 minutes, in such a way to guarantee that the thermal shock is short and does not alter the organoleptic characteristics of the garlic cloves, while eliminating the germs and bacteria contained in the jar.

At the end of the packaging and pasteurization process, the garlic cloves have a yellow external layer with a thickness of approximately 1 mm; the yellow external color is due to the presence of the curcuma.

The advantages of the garlic marinating process of the invention are evident because of the fact that the garlic has a good flavor and a pleasant smell thanks to the immersion in the compound and in the heated water.

Moreover, the garlic is very digestible and versatile because it can be used both as appetizer and in pasta dishes or salads.

## Claims

1. Marinating process of garlic cloves; said marinating process comprising the following steps:
- immersing the peeled garlic cloves with a salt concentration from 10% to 25% and a citric acid content of 0.5% in a receptacle with drinking water for an immersion time comprised between 2 and 4 days, in order to reduce the salt concentration of the garlic to 2%, wherein the quantity of garlic cloves introduced in the receptacle is equal to the quantity of water contained in the receptacle and said receptacle being a desalter comprising air blowers, a ball valve, a lower opening, recirculation pumps and thermal regulators;
wherein during said step of immersing the garlic cloves in the drinking water contained in the desalter:
- the drinking water contained in the desalter is changed by introducing new drinking water in the desalter by means of the ball valve and by draining the salt drinking water contained in the desalter through the lower opening of the desalter;
- the drinking water contained in the desalter is mixed by the recirculation pumps of the desalter, in such a way that all garlic cloves have the same salt concentration;
- air is blown in the desalter by the air blower of the desalter, in such a way to create bubbling intended to make the garlic fumes evaporate;
- the drinking water contained in the desalter is heated to a temperature comprised between 45 °C and 50 °C in order to maintain a chemical-physical structure of the garlic cloves, and then is cooled to ambient temperature;
- cooling the garlic cloves immersed in the water contained in the desalter to ambient temperature lasts for 4 - 8 hours;
- at the end of the step of immersing the garlic cloves in the water contained in the desalter, the salinity of the garlic cloves is checked because it must not exceed 2%;
wherein
during the first 30 - 60 hours from the step of immersing the garlic cloves in the drinking water contained in the desalter, the ball valve is left open in such a way to have a continuous water exchange; simultaneously, the same quantity of water comes out of the lower opening of the desalter and is drained by means of the pipe connected to said lower opening and the air blowers of the desalter are operated in intermittent mode for time intervals of approximately 4 - 8 hours;
after 20 - 30 hours from the beginning of the step of immersing the garlic cloves in the drinking water contained in the desalter, the water recirculation pumps are started and operated for the following 4 - 10 hours;
after 30 - 60 hours from the beginning of the step of immersing the garlic cloves in the drinking water contained in the desalter, the garlic cloves immersed in the water are heated to a temperature of 45 - 50°C by means of the temperature regulators of the desalter;
- letting the drinking water flow out of the receptacle;
- introducing a solution of drinking water, vinegar and anti-oxidants in the receptacle, in such a way to cover the garlic cloves, and letting the garlic cloves marinate in the solution for 10 - 14 hours, in such a way to reduce the pH of the garlic cloves to 3.2 and prevent the oxidation of the garlic cloves;
- draining the garlic cloves in order to eliminate the solution, at least partially.

2. The process of claim 1, wherein, the following steps are provided after the step of draining the garlic cloves in order to eliminate the solution, at least partially:
- placing the garlic cloves in a jar;
- pouring sunflower oil in a receptacle;
- introducing curcuma in the receptacle with the sunflower oil;
- mixing the sunflower oil and the curcuma in the receptacle, in such a way to obtain a sunflower oil - curcuma solution;
- pouring the sunflower oil - curcuma solution in the jar with the garlic cloves, in such a way that the garlic cloves are immersed in the sunflower oil - curcuma solution.

3. The process of any one of the preceding claims, wherein the following steps are provided after the step of heating the water contained in the receptacle:
- checking the salinity of the garlic cloves;
- if the salinity of the garlic cloves is higher than 2%, the step of changing the drinking water contained in the receptacle is repeated, in such a way to desalt the garlic cloves further;
- if the salinity of the garlic cloves is lower than 2%, the step of letting the drinking water out of the receptacle is carried out.

4. The process of any one of the preceding claims, wherein the step of introducing a solution of drinking water, vinegar and anti-oxidants in the receptacle provides for pouring a solution with the following weight percentages in the receptacle:
- 34 - 38% of vinegar,
- 2 - 6% of salt,
- 0.1 - 0.3% of citric acid,
- 0.02 - 0.08% of ascorbic acid,
- 57 - 61% of water.

5. The process of any one of the preceding claims, wherein, after the step of introducing a solution of drinking water, vinegar and anti-oxidants in the receptacle provides for seasoning the garlic cloves with the following spices:
- black pepper powder;
- crushed dried tomato;
- parsley;
- linen seeds.

6. The process of claim 5, wherein the seasoning step of the garlic cloves provides for:
- dumping the garlic cloves onto a stainless steel table;
- indiscriminately pouring the spices on the surface of the garlic cloves to be seasoned;
- mixing the seasoned garlic cloves by hand.

7. The process of claim 5 or 6, wherein a step of sorting the garlic cloves is provided before the step of seasoning the garlic cloves, in such a way to sort the garlic cloves to be seasoned, wherein the garlic cloves are sorted in such a way to eliminate any dark, broken or deformed cloves.

## Patentansprüche

1. Verfahren zum Marinieren von Knoblauchzehen; wobei das Marinieren folgende Schritte umfasst:
- Eintauchen der bereits geschälten Knoblauchzehen mit einer Salzkonzentration zwischen 10 % und 25 % und einem Zitronensäuregehalt von 0,5 % in einen Behälter mit Trinkwasser für eine Eintauchzeit zwischen 2 und 4 Tagen, um die Salzkonzentration des Knoblauchs auf 2 % zu senken, wobei die Menge der in den Behälter eingefüllten Knoblauchzehen gleich der im Behälter vorhandenen Wassermenge ist und wobei der Behälter ein Entsalzer mit Gebläsen, einem Kugelventil, einer unteren Öffnung, Umwälzpumpen und Thermoreglern ist;
wobei während des Schrittes des Eintauchens der Knoblauchzehen in das im Entsalzer enthaltene Trinkwasser:
- das im Entsalzer enthaltene Trinkwasser durch Zugeben von frischem Trinkwasser in den Entsalzer über das Kugelventil und durch Ablassen des in dem Entsalzer enthaltenen salzigen Trinkwassers über die untere Öffnung des Entsalzers ausgetauscht wird;
- das in dem Entsalzer enthaltene Trinkwasser durch die Umwälzpumpen des Entsalzers umgewälzt wird, so dass alle Knoblauchzehen dieselbe Salzkonzentration aufweisen;
- über die Gebläse des Entsalzers Luft in den Entsalzer geblasen wird, so dass es zu einer Blasenbildung kommt, welche in der Lage ist, die Knoblauchdünste zum Verdunsten zu bringen;
- das in dem Entsalzer enthaltene Trinkwasser auf eine Temperatur zwischen 45 °C und 50 °C erhitzt wird, um die chemisch-physikalische Struktur des Knoblauchs zu erhalten, und anschließend auf Umgebungstemperatur abgekühlt wird;
- die in das im Entsalzer enthaltene Wasser eingetauchten Knoblauchzehen für 4 - 8 Stunden auf Umgebungstemperatur abgekühlt werden;
- am Ende des Schrittes des Eintauchens der Knoblauchzehen in das im Entsalzer enthaltene Wasser der Salzgehalt der Knoblauchzehen geprüft wird, der nicht über 2 % liegen darf;
wobei
während der ersten 30 - 60 Stunden nach dem Schritt des Eintauchens der Knoblauchzehen in das im Entsalzer enthaltene Trinkwasser das Kugelventil offen gelassen wird, so dass ein ständiger Wasseraustausch gegeben ist; gleichzeitig die gleiche Menge an Wasser aus der unteren Öffnung des Entsalzers austritt und über den an die untere Öffnung angeschlossenen Schlauch abgelassen wird und die Gebläse des Entsalzers für Zeitintervalle von ungefähr 4 - 8 Stunden intermittierend betätigt werden;
nach 20 - 30 Stunden nach Beginn des Schrittes des Eintauchens der Knoblauchzehen in das im Entsalzer enthaltene Trinkwasser die Wasserumwälzpumpen betätigt werden und während der darauffolgenden 4 - 10 Stunden in Betrieb bleiben,
nach 30 - 60 Stunden nach Beginn des Schrittes des Eintauchens der Knoblauchzehen in das im Entsalzer enthaltene Trinkwasser die im Wasser eingetauchten Knoblauchzehen mittels der Thermoregler des Entsalzers auf eine Temperatur von 45 - 50 °C erhitzt werden;
- Ablaufenlassen des Trinkwassers aus dem Behälter;
- Einfüllen einer Lösung aus Trinkwasser, Essig und Antioxidantien in den Behälter, so dass die Knoblauchzehen bedeckt sind und Marinieren der Knoblauchzehen in der Lösung für einen Zeitraum von 10 - 14 Stunden, so dass der pH-Wert der Knoblauchzehen auf 3,2 gesenkt wird, um die Oxidation der Knoblauchzehen zu verhindern;
- Abtropfenlassen der Knoblauchzehen, um die Lösung mindestens teilweise zu beseitigen.

2. Verfahren nach Anspruch 1 wobei nach dem Schritt des Abtropfenlassens der Knoblauchzehen, um die Lösung mindestens teilweise zu beseitigen, die folgenden Schritte vorgesehen sind:
- Anordnen der Knoblauchzehen in ein Gefäß;
- Einfüllen von Sonnenblumenöl in einen Behälter;
- Hinzufügen von Kurkuma in den Behälter mit Sonnenblumenöl;
- Mischen des Sonnenblumenöls mit dem Kurkuma in dem Behälter, um eine Kurkuma-Sonnenblumenöl-Mischung zu erhalten;
- Einfüllen der Kurkuma-Sonnenblumenöl-Mischung in das Gefäß mit den Knoblauchzehen, so dass die Knoblauchzehen in der Kurkuma-Sonnenblumenöl-Mischung eingetaucht sind.

3. Verfahren nach einem der vorstehenden Ansprüche, wobei nach dem Schritt des Erwärmens des in dem Behälter enthaltenen Wassers folgende Schritte vorgesehen sind:
- Prüfen des Salzgehalts der Knoblauchzehen;
- wenn der Salzgehalt der Knoblauchzehen mehr als 2 % beträgt, wird der Schritt des Austauschens des in dem Behälter enthaltenen Trinkwassers wiederholt, um die Knoblauchzehen weiter zu entsalzen;
- wenn der Salzgehalt der Knoblauchzehen weniger als 2 % beträgt, wird der Schritt des Ablaufenlassens des Trinkwassers aus dem Behälter ausgeführt.

4. Verfahren nach einem der vorstehenden Ansprüche, wobei der Schritt des Einfüllens einer Lösung aus Trinkwasser, Essig und Antioxidantien in den Behälter das Einfüllen einer Lösung mit den folgenden Gewichtsprozentsätzen in den Behälter vorsieht:
- 34 - 38 % Essig,
- 2 - 6 % Salz,
- 0,1 - 0,3 % Zitronensäure,
- 0,02 - 0,08 % Ascorbinsäure,
- 57 - 61 % Wasser.

5. Verfahren nach einem der vorstehenden Ansprüche, wobei nach dem Schritt des Einfüllens einer Lösung aus Trinkwasser, Essig und Antioxidantien ein Schritt des Würzens der Knoblauchzehen mit folgenden Gewürzen vorgesehen ist:
- schwarzes Pfefferpulver;
- getrocknete, zerstoßene Tomaten;
- Petersilie;
- Leinsamen.

6. Verfahren nach Anspruch 5, wobei der Schritt des Würzens der Knoblauchzehen Folgendes vorsieht:
- Auskippen der Knoblauchzehen auf einen Edelstahltisch;
- Bestäuben der zu würzenden Knoblauchzehen mit den Gewürzen;
- händisches Durchmischen der gewürzten Knoblauchzehen.

7. Verfahren nach Anspruch 5 oder 6, wobei vor dem Schritt des Würzens der Knoblauchzehen ein Schritt des Auslesens der Knoblauchzehen vorgesehen ist, um die Knoblauchzehen auszusondern, die dunkel verfärbt, beschädigt oder missgestaltet sind.

## Revendications

1. Méthode pour mariner les gousses d'ail ; cette marinade comprenant les étapes suivantes :
- immersion des gousses d'ail préalablement épluchées dans un conteneur rempli d'eau potable ayant une concentration de sel comprise entre 10% et 25% et une teneur de 0,5 % d'acide citrique ; les maintenir ainsi immergées pour une période de temps comprise entre 2 et 4 jours, de manière à réduire la concentration de sel de l'ail jusqu'à 2%, où la quantité de gousses d'ail introduites dans le conteneur est égale à la quantité d'eau présente dans le conteneur et ledit conteneur étant un dessaleur comprenant des souffleurs, un clapet à bille, une ouverture inférieure, des pompes de recirculation et des régulateurs thermiques ;
où, pendant la phase d'immersion des gousses d'ail dans l'eau potable contenue dans le dessaleur :
- une rechange de l'eau potable contenue dans le dessaleur est effectuée en introduisant de l'eau potable fraiche dans le dessaleur moyennant le clapet à bille et en vidant l'eau potable salée contenue dans le dessaleur via l'ouverture inférieure du dessaleur ;
- l'eau potable contenue dans le dessaleur est mélangée par les pompes de recirculation du dessaleur de façon à ce que toutes les gousses d'ail soient exposées à la même concentration de sel ;
- de l'air est soufflé dans le dessaleur moyennant les souffleurs du dessaleur, de façon à créer un bouillonnement en mesure de faire évaporer les exhalations des gousses d'ail ;
- l'eau potable contenue dans le dessaleur est réchauffée jusqu'à une température comprise entre 45° et 50°, aux fins de préserver une structure chimique-physique des gousses d'ail ; ensuite il faut la laisser refroidir jusqu'à température ambiante ;
- les gousses d'ail immergées dans l'eau contenue dans le dessaleur sont refroidies, pendant 4 - 8 heures, jusqu'à température ambiante ;
- à la fin de la phase d'immersion des gousses d'ail dans l'eau contenue dans le dessaleur, il faut contrôler la salinité des gousses d'ail qui ne doit pas dépasser 2% ;
où
pendant les premières 30 - 60 heures de la phase d'immersion des gousses d'ail dans l'eau potable contenue dans le dessaleur, le clapet à bille doit rester ouvert de façon à avoir une rechange constante de l'eau ; simultanément, la même quantité d'eau est évacuée depuis l'ouverture inférieure du dessaleur et vidée via le tuyau relié à ladite ouverture inférieure et les souffleurs du dessaleur sont activés, de manière intermittente, pour des intervalles de temps d'environ 4 - 8 heures ;
après 20 - 30 heures du début de la phase d'immersion des gousses d'ail dans l'eau potable contenue dans le dessaleur, les pompes de recirculation de l'eau sont activées et restent en fonctionnement pendant les successives 4 - 10 heures,
après 30 - 60 heures du début de la phase d'immersion des gousses d'ail dans l'eau potable contenue dans le dessaleur, les gousses d'ail immergées dans l'eau sont réchauffées à une température de 45 - 50 °C moyennant les régulateurs de température du dessaleur ;
- faire défluer l'eau potable hors du conteneur ;
- introduire une solution d'eau potable, vinaigre et antioxydants dans le conteneur, de façon à recouvrir les gousses d'ail et laisser mariner les gousses d'ail dans la solution pendant 10 - 14 heures, de manière à réduire le pH des gousses d'ail jusqu'à 3,2 et à en empêcher l'oxydation ;
- égoutter les gousses d'ail de façon à éliminer, au moins partiellement, la solution.

2. Méthode selon la revendication 1, où, après la phase d'égouttement des gousses d'ail pour éliminer au moins partiellement la solution, il y a les étapes de :
- disposer les gousses d'ail dans un bocal ;
- verser de l'huile de tournesol dans un récipient :
- introduire du curcuma dans le récipient contenant l'huile de tournesol ;
- mélanger l'huile de tournesol et le curcuma dans le récipient de façon à obtenir un mélange d'huile de tournesol et de curcuma ;
- verser le mélange d'huile de tournesol et de curcuma dans le bocal contenant les gousses d'ail de façon à ce que les gousses d'ail soient immergées dans le mélange d'huile de tournesol et de curcuma.

3. Méthode selon l'une quelconque des revendications précédentes, où, après la phase de réchauffement de l'eau contenue dans le conteneur, les étapes suivantes sont prévues :
- contrôle de la salinité des gousses d'ail ;
- si la salinité des gousses d'ail est supérieure à 2%, on procède à nouveau à la phase de rechange de l'eau potable contenue dans le conteneur afin de dessaler ultérieurement les gousses d'ail ;
- si la salinité des gousses d'ail est inférieure à 2%, on procède à faire défluer l'eau potable hors du conteneur.

4. Méthode selon l'une quelconque des revendications précédentes, où l'étape d'introduction dans le récipient d'une solution d'eau potable, vinaigre et antioxydants prévoit de verser dans le récipient une solution comprenant les poids en pourcent suivants :
- 34 - 38% de vinaigre,
- 2 - 6% de sel,
- 0,1 - 0,3% d'acide citrique,
- 0,02 - 0,08% d'acide ascorbique,
- 57 - 61% d'eau.

5. Méthode selon l'une quelconque des revendications précédentes, où, après la phase d'introduction dans le récipient d'une solution d'eau potable, vinaigre et antioxydants, une étape d'assaisonnement des gousses d'ail est prévue avec les épices suivantes :
- poivre noir moulu ;
- tomate séchée concassée ;
- persil ;
- graines de lin.

6. Méthode selon la revendication 5, où la phase d'assaisonnement prévoit de :
- renverser les gousses d'ail sur une table en acier inox ;
- verser à pluie les épices sur la surface des gousses d'ail à assaisonner ;
- mélanger à la main les gousses d'ail assaisonnées.

7. Méthode selon la revendication 5 ou 6, où, avant la phase d'assaisonnement des gousses d'ail, une phase de tri des gousses d'ail est prévue, de manière à sélectionner les gousses d'ail à assaisonner, pendant laquelle les gousses d'ail sont sélectionnées afin d'éliminer les gousses d'ail de couleur foncée, celles cassées ou déformes.
